# EUROPÄISCHE PATENTSCHRIFT

(11) **EP 3 947 983 B1**
(45) Veröffentlichungstag und Bekanntmachung des Hinweises auf die Patenterteilung: **09.04.2025**
(21) Anmeldenummer: 20707391.7
(22) Anmeldetag: 25.02.2020
(51) Int. Cl.: F16B 2/08, H01M 8/248

(54) **SPANN- UND HALTEVORRICHTUNG**
CLAMPING AND HOLDING APPARATUS
DISPOSITIF DE SERRAGE ET DE RETENUE

(30) Priorität: 01.04.2019 DE 102019204529
(43) Veröffentlichungstag der Anmeldung: 09.02.2022
(73) Patentinhaber: ContiTech Deutschland GmbH, 30175 Hannover (DE)
(72) Erfinder: FISS, Tim, 30419 Hannover (DE); FREIHEIT, Philipp, 30419 Hannover (DE)
(74) Vertreter: Continental Corporation
(86) Internationale Anmeldenummer: PCT/EP2020/054847
(87) Internationale Veröffentlichungsnummer: WO 2020/200589

(56) Entgegenhaltungen:
- CN-A- 108 346 814
- DE-U- 1 938 563
- DE-U1- 202013 003 672

## Beschreibung

Die Erfindung betrifft eine Spann- und Haltevorrichtung für einen mit mindestens einem Spannmittel unter Vorspannung fixierten Gegenstand, vorzugsweise für einen volumenveränderlichen Behälter.

Spanneinrichtungen zum sicheren Spannen eines beliebigen Gegenstandes, wie beispielsweise eines volumenveränderlichen Gegenstands in Form eines Tanks oder Behälters sind bekannt. So offenbart die DE 10 2006 059977 A1 eine Profilunterlage für ein Spannelement eines Kraftstofftanks, die die Übertragung von Vibrationen der Karosserie verhindern und eine gewisses Volumenveränderung zulassen soll.

Die DE 20 2013 003 672 U1 offenbart eine Spanneinrichtung für einen Zellstapel, umfassend mehrere zwischen einem ersten Stapelende des Zellstapels und einem zweiten Stapelende des Zellstapels gestapelte Zelleinheiten und ein Zugelement, mit welchem zwischen dem ersten Stapelende und dem zweiten Stapelende eine Verspannkraft zum Verspannen der Zelleinheiten übertragbar ist.

Für schwerere und starken Kräften unterworfene Gegenstände sind Spanneinrichtungen erforderlich, die für hohe Vorspannkräfte im Bereich mehrerer Kilonewton je Spannelement geeignet sind. Solche Spannelemente sollen einerseits eine hohe Sicherheit gegen Bruch oder Reißen bieten, andererseits jedoch durch federnde Eigenschaften einen nicht unerheblichen positiven wie negativen Ausdehnungsweg des gespannten Elementes zulassen, ohne dabei ein erlaubtes Toleranzband der Spannkraft zu verlassen. Bisher sind für solche Anwendungen nur Spannelemente in Form von Stahlbändern bekannt, die ggf. durch Stahlfederpakete beaufschlagt sind.

Für die Erfindung bestand daher die Aufgabe, eine Spann- und Haltevorrichtung bereitzustellen, bei der auf die an sich wenig dehnfähigen Stahlbänder und auf aufwendige Stahlfederpakete verzichtet werden kann. Außerdem bestand die Aufgabe darin, bei mindestens vergleichbarer federnder Spannwirkung auf das zu spannenden Element Vorteile hinsichtlich Bauraum, Eigengewicht und Kosten zu realisieren.

Gelöst wird diese Aufgabe durch die Merkmale des Hauptanspruchs. Weitere vorteilhafte Ausbildungen sind in den Unteransprüchen offenbart.

Dabei weist die Spann- und Haltevorrichtung einen dem Gegenstand zugeordneten Spannrahmen oder -träger sowie eine dem Spannrahmen oder -träger zugeordnete Spanneinrichtung für das Spannmittel auf, wobei der Spannrahmen oder -träger mit Führungs- oder Leiteinrichtungen für das Spannmittel versehen und durch letzteres mit dem Gegenstand unter Bereitstellung einer Vorspannkraft verbindbar ist, wobei das Spannmittel aus mindestens einem den Gegenstand und mindestens Teile des Spannrahmens oder -trägers umschlingenden Endlosriemen aus elastomeren Material besteht, dessen Umschlingungslänge durch die Spanneinrichtung veränderbar ist.

Bisher war im Stand der Technik die Ansicht verbreitet, dass der Einsatz eines Endlosriemens aus elastomeren Material als Spannelement ungeeignet sei, insbesondere aufgrund von Problemen bei der Montage und beim Aufbringen von Spannkräften. Ein solcher Riemen kann nämlich nicht ohne erhebliche Komplikationen gedehnt und über das zu spannende Element geschoben werden. Auch ist es problematisch, die gewünschte Vorspannkraft über das geometrische Zusammenspiel von zu spannendem Element und Spannriemen präzise einzustellen.

Die erfindungsgemäße Ausbildung löst dies dadurch, dass einerseits die elastische Spannwirkung eines herkömmlichen Riemens ausgenutzt wird, um Volumenveränderungen des zu spannenden Elementes auszugleichen und letzteres trotzdem unter Vorspannung gehalten wird, wobei andererseits eine Spanneinrichtung für das Spannmittel bzw. den Endlosriemen vorgesehen ist, welches die ursprüngliche Umschlingungslänge des als Endlosriemen ausgebildeten Spannmittels verändert.

Ein solche Spanneinrichtung bzw. ein Spannschloss löst dabei die Aufgabe der Montage derart, dass der Spannriemen schlaff und vorspannungsfrei mit Überlänge zuerst um das zu spannende Element, d.h. den Gegenstand gelegt werden kann, bevor die Spanneinrichtung die wirksame Länge, d.h. die Umschlingungslänge des Spannriemens verkürzt und so die gewünschte Vorspannung aufbringt. Weiterhin lässt sich die Vorspannung präzise einstellen, beispielsweise über das aufgebrachte Drehmoment an einer durch Drehung spannbaren Spanneinrichtung, wie weiter unten noch ausgeführt. Damit ist unabhängig von Fertigungsschwankungen oder geometrischen und physikalischen Toleranzen des Spannmittels oder -riemens stets eine genau einstellbare gleichförmige Spannkraft gegeben.

Besonders einfach herzustellen ist die Spanneinrichtung dadurch, dass die Spanneinrichtung als Drehknebel ausgebildet ist. Der Drehknebel ist als eine in der Spanneinrichtung um eine senkrecht zur Längsachse des Spannmittels ausgerichtete Achse drehbar gelagerte Gabel ausgebildet, die das Spannmittel so umfasst, dass bei Drehung der Gabel das Spannmittel aufgewickelt und dessen Umschlingungslänge verkleinert werden kann. Dadurch erreicht man eine Knebelwirkung, die besonders raumsparend zu realisieren ist. Dabei wird das als Antriebsriemen ausgebildete Spannmittel auf einfache Weise durch mindestens zwei Gabelzinken umfasst oder umgeben und kann so leicht durch eine Drehung um die Längsachse des Knebels in seiner Umschlingungslänge gekürzt werden.

Eine vorteilhafte Weiterbildung besteht darin, dass das Spannmittel als endloser Antriebsriemen mit in seiner Längsrichtung verlaufenden Zugträgern ausgebildet ist, vorzugsweise als Flachriemen. Solche Antriebsriemen und insbesondere Flachriemen können auf einfache Weise an dem zu spannenden Gegenstand angebracht und in ihrer Länge darauf ausgerichtet hergestellt werden. Außerdem besteht damit die Möglichkeit, herkömmliche Standardteile zu verwenden.

Eine weitere vorteilhafte Ausbildung besteht darin, dass mehrere nebeneinander liegende und durch die Spanneinrichtung in ihrer Umschlingungslänge veränderbare Spannmittel vorgesehen sind. Mit einer solchen Ausbildung kann man größere Spannkräfte realisieren und auch eine gleichmäßige Kraftverteilung und Druckverteilung in Bezug auf die Gegenstandsoberfläche erreichen.

Eine weitere vorteilhafte Ausbildung besteht darin, dass der Drehknebel mit einem vorbestimmten Drehmoment beaufschlagbar ist. Mit einer solchen Vorbestimmung vermeidet man ein Überdrehen der Spanneinrichtung oder des Spannmittels genauso wie ein zu locker oder mit zu viel Lose um den zu spannenden Gegenstand umgelegtes Spannmittel.

Eine weitere vorteilhafte Ausbildung besteht darin, dass die Spanneinrichtung mit einer Feststelleinrichtung versehen ist, mit deren Hilfe nach Erreichen einer bestimmten Vorspannung oder eines bestimmten Drehwinkels ein Fixieren der Stellung der Spanneinrichtung möglich ist. Beispielsweise kann dies bei einem Drehknebel durch eine in einem Drehschlitz geführten Schraube geschehen.

Eine weitere vorteilhafte Ausbildung besteht darin, dass die Spanneinrichtung für das Spannmittel so ausgebildet ist, dass der Gegenstand unter Bereitstellung einer federnd abgestützten Vorspannkraft mit dem Spannrahmen oder -träger verbindbar ist. Durch eine solche Ausbildung ist sichergestellt, dass keine Überlastung des Spannmittels erfolgt und doch stets eine ausreichend dimensionierte Vorspannkraft vorhanden ist.

Eine besonders vorteilhafte Anwendung der der erfindungsgemäßen Spann- und Haltevorrichtung ergibt sich durch ihre Nutzung bei einer mit mindestens einem Spannmittel unter Vorspannung fixierten Brennstoffzelle, vorzugsweise einem Brennstoffzellenpaket aus einzelnen modulartig miteinander verbundenen Brennstoffzellen. Hier greifen die Vorteile in Bezug auf kleinen Bauraum, geringes Gewicht und leichte Austauschbarkeit in besonderer Weise.

Anhand eines Ausführungsbeispiels soll die Erfindung näher erläutert werden. Es zeigen
- Fig. 1: eine erfindungsgemäße Spann- und Haltevorrichtung für einen mit mehreren Spannmitteln fixiertes Brennstoffzellenpaket,
- Fig. 2: den in der Fig. 1 gezeigten Spannrahmen oder -träger im Detail,
- Fig. 3: die in der Fig. 1 gezeigte als Drehknebel ausgebildete Spanneinrichtung im Detail,
- Fig. 4: die Funktionsweise der erfindungsgemäßen Spann- und Haltevorrichtung durch Vergleich des ungespannten Zustands mit dem gespannten Zustand,
- Fig. 5: die Funktionsweise bei der Fixierung des Spannungszustands der erfindungsgemäße Spann- und Haltevorrichtung, ebenfalls durch Vergleich des ungespannten Zustands mit dem gespannten Zustand,
- Fig. 6: eine weitere Ausführung einer erfindungsgemäßen Spann- und Haltevorrichtung, bei der die Spanneinrichtung durch ein Federpaket beaufschlagt ist.

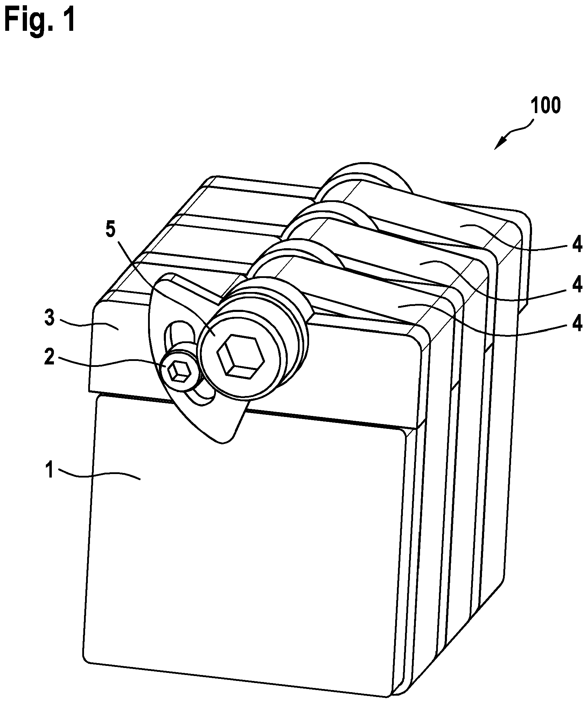

Die Fig. 1 zeigt eine erfindungsgemäße Spann- und Haltevorrichtung 100 für ein mit mehreren Spannmitteln 4 unter Vorspannung fixiertes Brennstoffzellenpaket 1 im gespannten Zustand. Das Brennstoffzellenpaket besteht aus mehreren modulartig miteinander verbindbaren Brennstoffzellen.

Die Spann- und Haltevorrichtung weist einen dem Brennstoffzellenpaket 1 zugeordneten Spannrahmen oder -träger 3 sowie eine dem Spannrahmen oder -träger zugeordnete Spanneinrichtung 5 für das Spannmittel 4 auf, wobei mehrere Spannmittel 4 in dieser Ausführung vorgesehen sind, nämlich drei endlose, geschlossene, handelsübliche Flachriemen mit in ihrer jeweiligen Längsrichtung verlaufenden Zugträgern. Die Zugträger sind hier nicht näher dargestellt. Jedes der Spannmittel 4 ist in dieser Ausführung für eine modulartig miteinander verbundenen Brennstoffzellen vorgesehen.

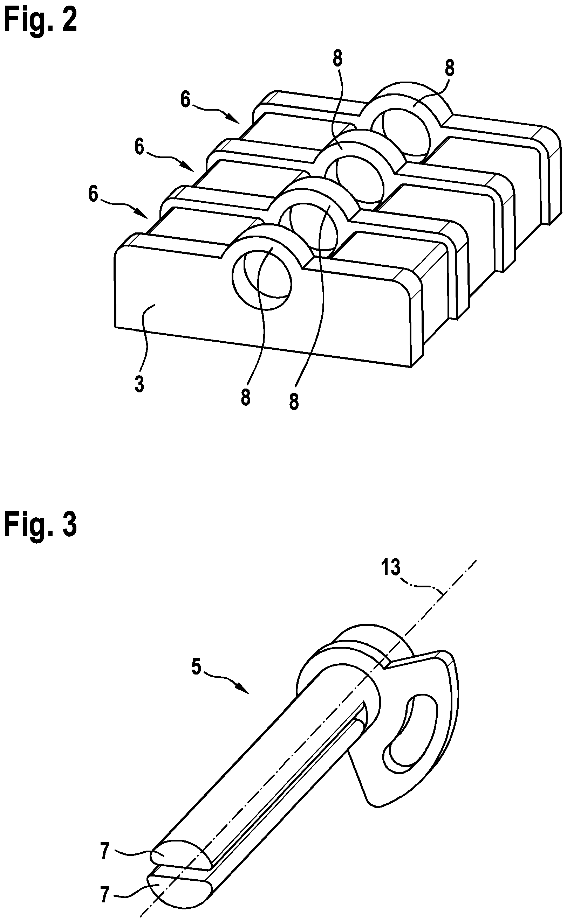

Der Spannrahmen oder -träger 3 ist im Detail noch einmal in der Fig. 2 gezeigt. Der Spannrahmen oder -träger ist mit Führungs- oder Leiteinrichtungen 6 für die als Flachriemen ausgebildeten Spannmittel 4 versehen und so ausgeformt, dass der Gegenstand, hier das Brennstoffzellenpaket 1 bzw. die einzelnen modulartig miteinander verbundenen Brennstoffzellen, mit seinem Oberteil/oberen Bereich in den Spannrahmen oder -träger 3 eingesetzt werden kann und dann das Brennstoffzellenpaket 1 durch die Vorspannkraft am bzw. im Spannrahmen oder -träger 3 fixiert ist.

Das volumenveränderliche zu spannende Brennstoffzellenpaket 1 wird damit an seiner Oberseite durch den Spannrahmen oder -träger 3 sowie in allen anderen Richtungen durch die drei als Flachriemen ausgebildeten Spannmittel 4 unter Vorspannung gehalten. Volumenveränderungen werden durch die elastische

Dehnung der als Flachriemen ausgebildeten Spannmittel 4 entlang ihrer Federkennlinie aufgenommen.

Die Flachriemen bestehen hier aus gespulten Festigkeitsträgern, die in einer Elastomermatrix, hier in Ethylen-Propylen-Dien-Elastomer (EPDM) eingebettet sind, um im Hinblick auf die Temperaturbelastungen und Elastizitätsanforderungen bei einem Brennstoffzellenpaket allen Anforderungen zu entsprechen.

Für die vereinfachte Montage der als Flachriemen ausgebildeten Spannmittel 4 werden diese ungespannt über den Spannrahmen oder -träger 3 in die dafür vorgesehenen Aussparungen bzw. Führungs- oder Leiteinrichtungen 6 eingelegt. Der Spannrahmen oder -träger 3 liegt dabei auf dem zu spannenden Brennstoffzellenpaket 1 bzw. den einzelnen modulartig miteinander verbundenen Brennstoffzellen auf, während die in entsprechender Länge ausgebildeten Spannmittel 4 einfach über beide Bauteile geschoben werden. Die als Flachriemen ausgebildeten Spannmittel 4 umschlingen dann den Brennstoffzellenpaket 1 sowie den Spannrahmens oder -träger 3. Ihre jeweilige Umschlingungslänge ist durch die Spanneinrichtung 5 veränderbar.

Die als hier als Drehknebel ausgebildete Spanneinrichtung 5 ist im Einzelnen noch einmal in Fig. 3 gezeigt. Die als Drehknebel ausgebildete Spanneinrichtung ist um eine senkrecht zur Längsachse der Spannmittel/Flachriemen ausgerichtete Achse 13 drehbar gelagert und über einen Teil ihrer Länge als eine das Spannmittel umfassende Gabel 7 ausgebildet. Bei Drehung des Drehknebels/der Spanneinrichtung 5 und damit also bei Drehung der Gabel 7 wird das bzw. die als Flachriemen ausgebildeten Spannmittel 4 "aufgewickelt" und deren jeweilige Umschlingungslängen verringert.

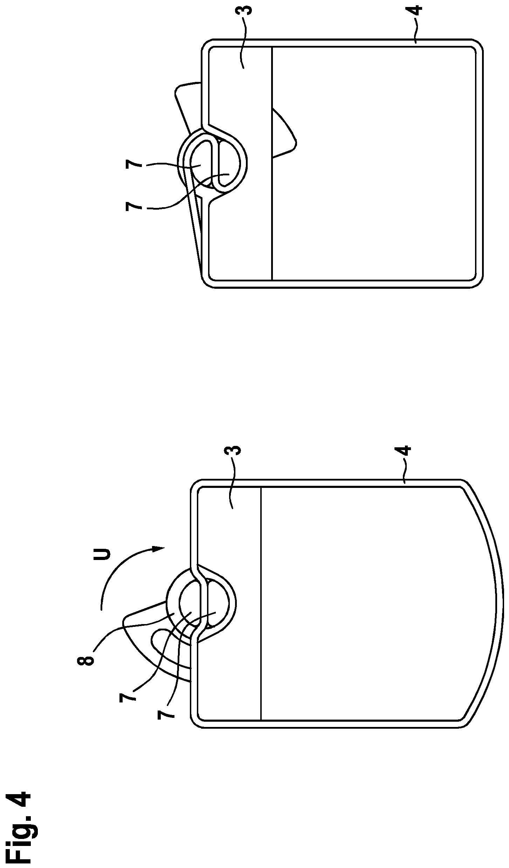

Prinzipiell ist dies in der Fig. 4 verdeutlicht. Figur 4 zeigt auf ihrer linken Seite den Ursprungszustand vor Spannung der Flachriemen und auf der rechten Seite den Zustand nach einer halben Umdrehung U des Drehknebel und nach der Spannung der Flachriemen.

Der über einen Teil seiner Länge als Gabel 7 ausgebildete als Gabel ausgelegte Spanneinrichtung 5 ist dabei durch die Augen 8 des Spannrahmens oder -trägers 3 geführt und dort gelagert.

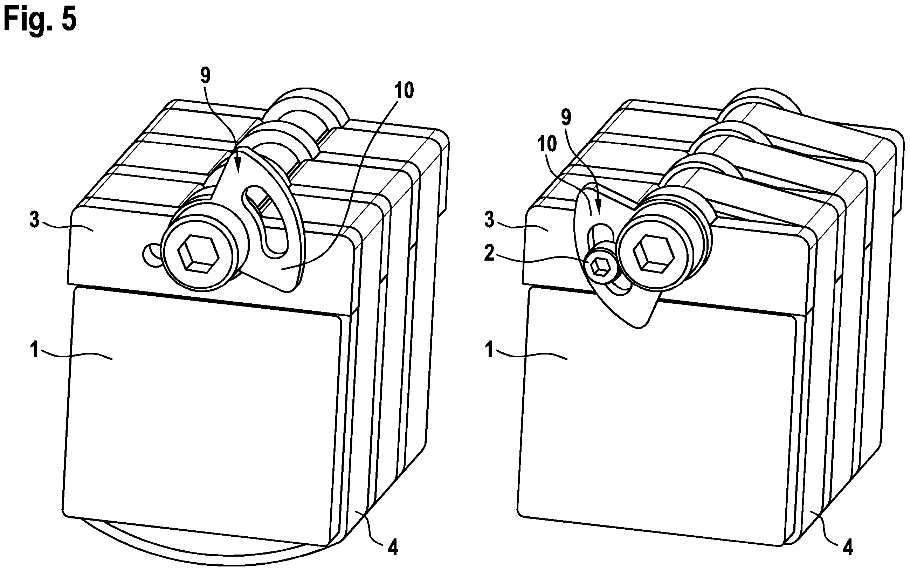

Fig. 5 zeigt ebenfalls auf ihrer linken Seite ein Brennstoffzellenpaket 1 mit aufgesetztem Spannrahmen oder -träger 3 im Ursprungszustand vor Spannung der Flachriemen und auf der rechten Seite den Zustand nach etwa einer halben Umdrehung des Drehknebels und nach der Spannung der Flachriemen. Hier kann man auch deutlich erkennen, dass die gespannte Flachriemen mit Hilfe der als Gabel ausgelegten Spanneinrichtung 5 in gespanntem Zustand durch die Schraube 2 fixiert werden. Dies geschieht, wie bereits oben dargestellt, dadurch, dass die in den Spannrahmen oder -träger 3 eingreifende Schraube 2 durch einen Drehschlitz 9 geführt ist, der in einem zur Spanneinrichtung 5 gehörigen Flansch 10 vorgesehen ist. Sobald die Schraube angezogen wird, ist die verspannte Stellung der Spanneinrichtung 5 fixiert. Der Spannrahmen oder -träger 3 umfasst hier das Brennstoffzellenpaket 1 bzw. die einzelnen modulartig miteinander verbundenen Brennstoffzellen 1 mindestens teilweise, nämlich den jeweils oberen Teil des Brennstoffzellenpaket 1 / der einzelnen modulartig miteinander verbundenen Brennstoffzellen.

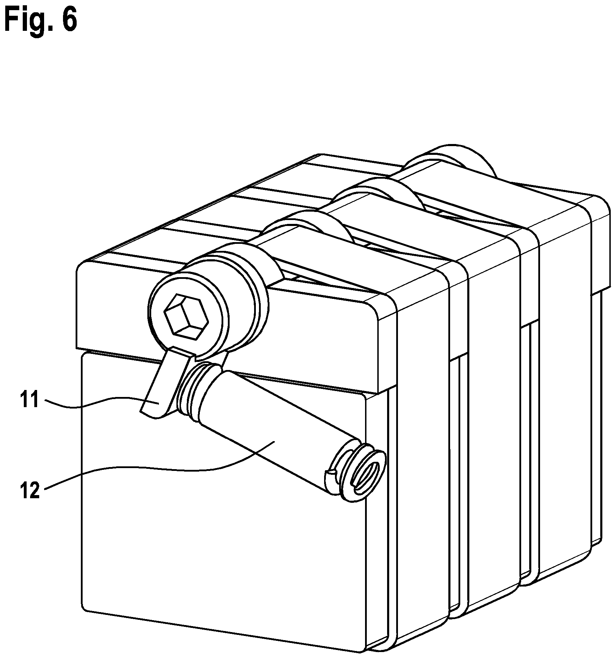

Fig. 6 zeigt eine weitere Ausführung einer Spann- und Haltevorrichtung, bei der ein zur Spanneinrichtung 5 gehörigen Flansch 11 durch ein Federpaket 12 beaufschlagt wird. In dieser Ausführungsform wird die um 180° gedrehte Spanneinrichtung 5 nicht mit einer Schraube in einer fixen Position arretiert, sondern durch eine Schraubenfeder schwimmend abgestützt. Dies hat zum Vorteil, dass bei kleinen Volumenänderungen nur die elastischen Flachriemen 4 die Volumenänderung kompensieren, jedoch bei größeren Änderungen, sobald nämlich die Reibkräfte der Spanneinrichtung 5 überschritten werden, zusätzlich die Federkennlinie der vorgespannten Schraubenfeder, Tellerfeder oder Bogenfeder zum Tragen kommt und größere Wege mit kleineren Kraftänderungen kompensiert werden können.

### Bezugszeichenliste

### (Teil der Beschreibung)

- 1: Brennstoffzellenpaket
- 2: Schraube
- 3: Spannrahmen oder -träger
- 4: Spannmittel
- 5: Spanneinrichtung
- 6: Führungs- oder Leiteinrichtung
- 7: Gabel
- 8: Auge des Spannrahmens oder -trägers
- 9: Drehschlitz
- 10: Flansch
- 11: Flansch
- 12: Federpaket
- 13: Achse

## Patentansprüche

1. Spann- und Haltevorrichtung mit mindestens einem Spannmittel (4) zur Vorspannung eines fixierten Gegenstands (1), vorzugsweise für einen volumenveränderlichen Behälter, wobei die Spann- und Haltevorrichtung einen dem Gegenstand zugeordneten Spannrahmen oder -träger (3) sowie eine dem Spannrahmen oder - träger zugeordnete Spanneinrichtung (5) für das Spannmittel (4) aufweist, wobei der Spannrahmen oder -träger (3) mit Führungs- oder Leiteinrichtungen (6) für das Spannmittel versehen und durch letzteres mit dem Gegenstand (1) unter Bereitstellung einer Vorspannkraft verbindbar ist, wobei das Spannmittel (4) aus mindestens einem den Gegenstand und mindestens Teile des Spannrahmens oder - trägers umschlingenden Endlosriemen aus elastomeren Material besteht, dessen Umschlingungslänge durch die Spanneinrichtung (5) veränderbar ist, wobei die Spanneinrichtung (5) als Drehknebel ausgebildet ist,
**dadurch gekennzeichnet, dass**
der Drehknebel als in der Spanneinrichtung (5) um eine senkrecht zur Längsachse des Spannmittels (4) ausgerichtete Achse (13) drehbar gelagerte und das Spannmittel (4) so umfassende Gabel (7) ausgebildet ist, dass bei Drehung der Gabel (7) das Spannmittel (4) aufgewickelt und dessen Umschlingungslänge verringerbar ist.

2. Spann- und Haltevorrichtung nach Anspruch 1, bei der das Spannmittel (4) als endloser Antriebsriemen mit in seiner Längsrichtung verlaufenden Zugträgern ausgebildet ist, vorzugsweise als Flachriemen.

3. Spann- und Haltevorrichtung nach Anspruch 1 oder 2, bei der mehrere nebeneinander liegende und durch die Spanneinrichtung (5) in ihrer Umschlingungslänge veränderbare Spannmittel (4) vorgesehen sind.

4. Spann- und Haltevorrichtung nach einem der vorhergehenden Ansprüche, bei der der Drehknebel mit einem vorbestimmten Drehmoment beaufschlagbar ist.

5. Spann- und Haltevorrichtung nach einem der Ansprüche 1 bis 4, bei der die Spanneinrichtung (5) mit einer Feststelleinrichtung (2, 9, 10) versehen ist.

6. Spann- und Haltevorrichtung nach einem der Ansprüche 1 bis 4, bei der die Spanneinrichtung (5) für das Spannmittel (4) so ausgebildet ist, dass der Gegenstand unter Bereitstellung einer federnd abgestützten Vorspannkraft mit dem Spannrahmen oder -träger verbindbar ist.

7. Spann- und Haltevorrichtung nach einem der Ansprüche 1 bis 6, bei der der Spannrahmen oder -träger (3) den Gegenstand (1) mindestens teilweise umfasst.

8. Verwendung einer Spann- und Haltevorrichtung nach einem der Ansprüche 1 bis 7 für eine mit mindestens einem Spannmittel (4) unter Vorspannung fixierten Brennstoffzelle, vorzugsweise für ein Brennstoffzellenpaket aus einzelnen modulartig miteinander verbundenen Brennstoffzellen.

## Claims

1. Clamping and holding apparatus having at least one clamping means (4) for preloading a fixed article (1), preferably for a container of variable volume, the clamping and holding apparatus having a clamping frame or carrier (3) assigned to the article, and also a clamping device (5), assigned to the clamping frame or carrier, for the clamping means (4), the clamping frame or carrier (3) being provided with guide or directing devices (6) for the clamping means and being able to be connected by said clamping means to the article (1) so as to provide a preload force, the clamping means (4) being composed of at least one endless belt composed of elastomer material which wraps around the article and at least parts of the clamping frame or carrier and the wraparound length of which is variable by means of the clamping device (5), the clamping device (5) being configured in the form of a rotary knob,
**characterized in that**
the rotary knob is configured in the form of a fork (7) which is mounted in the clamping device (5) so as to be rotatable about an axis (13) oriented perpendicularly with respect to the longitudinal axis of the clamping means (4) and which encompasses the clamping means (4) in such a way that during rotation of the fork (7), the clamping means (4) is wound up and its wraparound length can be reduced.

2. Clamping and holding apparatus according to Claim 1, in which the clamping means (4) is configured in the form of an endless drive belt with tension members extending in its longitudinal direction, preferably in the form of a flat belt.

3. Clamping and holding apparatus according to Claim 1 or 2, in which a plurality of clamping means (4) which lie next to one another and the wraparound length of which is variable by means of the clamping device (5) are provided.

4. Clamping and holding apparatus according to one of the preceding claims, in which a predetermined torque can be applied to the rotary knob.

5. Clamping and holding apparatus according to one of Claims 1 to 4, in which the clamping device (5) is provided with a fixing device (2, 9, 10).

6. Clamping and holding apparatus according to one of Claims 1 to 4, in which the clamping device (5) for the clamping means (4) is configured such that the article is connectable to the clamping frame or carrier so as to provide a resiliently supported preload force.

7. Clamping and holding apparatus according to one of Claims 1 to 6, in which the clamping frame or carrier (3) at least partially encompasses the article (1).

8. Use of a clamping and holding apparatus according to one of Claims 1 to 7 for a fuel cell fixed under preload by at least one clamping means (4), preferably for a fuel cell pack made up of individual fuel cells connected to one another in a modular manner.

## Revendications

1. Dispositif de serrage et de maintien avec au moins un moyen de serrage (4) pour la précontrainte d'un objet (1) fixé, de préférence pour un récipient à volume variable, le dispositif de serrage et de maintien présentant un cadre ou support de serrage (3) associé à l'objet ainsi qu'un appareil de serrage (5) associé au cadre ou support de serrage pour le moyen de serrage (4), le cadre ou le support de serrage (3) étant pourvu d'appareils de guidage ou de conduite (6) pour le moyen de serrage et pouvant être relié par ce dernier à l'objet (1) en fournissant une force de précontrainte, le moyen de serrage (4) étant constitué d'au moins une courroie sans fin en matériau élastomère qui s'enroule autour de l'objet et au moins de parties du cadre ou du support de serrage et dont la longueur d'enroulement peut être modifiée par l'appareil de serrage (5), l'appareil de serrage (5) étant réalisé sous forme de manette rotative,
**caractérisé en ce que**
la manette rotative est réalisée sous forme de fourche (7) montée dans l'appareil de serrage (5) de manière à pouvoir tourner autour d'un axe (13) orienté perpendiculairement à l'axe longitudinal du moyen de serrage (4) et entourant le moyen de serrage (4) de telle sorte que, lors de la rotation de la fourche (7), le moyen de serrage (4) peut être enroulé et sa longueur d'enroulement peut être réduite.

2. Dispositif de serrage et de maintien selon la revendication 1, dans lequel le moyen de serrage (4) est réalisé sous forme de courroie d'entraînement sans fin avec des supports de traction s'étendant dans sa direction longitudinale, de préférence sous forme de courroie plate.

3. Dispositif de serrage et de maintien selon la revendication 1 ou 2, dans lequel il est prévu plusieurs moyens de serrage (4) juxtaposés et dont la longueur d'enroulement peut être modifiée par l'appareil de serrage (5).

4. Dispositif de serrage et de maintien selon l'une quelconque des revendications précédentes, dans lequel la manette rotative peut être soumise à un couple de rotation prédéterminé.

5. Dispositif de serrage et de maintien selon l'une quelconque des revendications 1 à 4, dans lequel l'appareil de serrage (5) est pourvu d'un appareil de blocage (2, 9, 10).

6. Dispositif de serrage et de maintien selon l'une quelconque des revendications 1 à 4, dans lequel l'appareil de serrage (5) pour le moyen de serrage (4) est réalisé de telle sorte que l'objet peut être relié au cadre ou au support de serrage en fournissant une force de précontrainte soutenue de manière élastique.

7. Dispositif de serrage et de maintien selon l'une quelconque des revendications 1 à 6, dans lequel le cadre ou support de serrage (3) entoure au moins partiellement l'objet (1).

8. Utilisation d'un dispositif de serrage et de maintien selon l'une quelconque des revendications 1 à 7 pour une pile à combustible fixée sous précontrainte par au moins un moyen de serrage (4), de préférence pour un ensemble de piles à combustible composé de piles à combustible individuelles reliées entre elles de manière modulaire.
